Europäisches Patentamt

European Patent Office

Office européen des brevets

(11) Veröffentlichungsnummer : **0 449 039 B1**

# (12) EUROPÄISCHE PATENTSCHRIFT

(45) Veröffentlichungstag der Patentschrift :
**15.11.95 Patentblatt 95/46**

(51) Int. Cl.⁶ : **G05B 19/4103**

(21) Anmeldenummer : **91103864.4**

(22) Anmeldetag : **13.03.91**

(54) **Verfahren zur Steuerung von Positioniersystemen.**

(30) Priorität : **30.03.90 EP 90106197**

(43) Veröffentlichungstag der Anmeldung :
**02.10.91 Patentblatt 91/40**

(45) Bekanntmachung des Hinweises auf die
Patenterteilung :
**15.11.95 Patentblatt 95/46**

(84) Benannte Vertragsstaaten :
**DE FR GB IT NL SE**

(56) Entgegenhaltungen :
**EP-A- 0 075 792**

(56) Entgegenhaltungen :
**ROBOTERSYSTEME. vol. 6, no. 1, 26 März
1990, BERLIN DE Seiten 31 - 38; A. Visser und
W. Kühn: "Offline-Korrektur von Bewegungsbahnen mit variablerOrientierung"**

(73) Patentinhaber : **SIEMENS
AKTIENGESELLSCHAFT
Wittelsbacherplatz 2
D-80333 München (DE)**

(72) Erfinder : **Stelzer, Jörg, Dr.
Verstorben (DE)**
Erfinder : **Rusch, Matthias, Dipl.-Ing.
Miranstrasse 75
W-1000 Berlin 27 (DE)**

EP 0 449 039 B1

**Beschreibung**

Moderne Steuerungen von Positioniersystemen bieten die Möglichkeit, einen Körper sowohl in der Position als auch in der Orientierung auf definierten Bahnen in einem Bezugssystem zu führen.

Zu solchen Positioniersystemen zählen z.B. Industrieroboter und Werkzeugmaschinen, die in der Regel über mehrere bewegliche Elemente verfügen.

Eine abzufahrende Bahn im Raum wird dabei durch eine Vielzahl einzelner Bewegungssätze oder Bahnsegmente interpoliert. Dabei sind die vorgegebenen Orientierungsbahnen in den programmierten Zwischenpunkten im allgemeinen nicht stetig differenzierbar. Das heißt, daß die Orientierungsgeschwindigkeit des zu positionierenden Körpers am Ende des ersten Bewegungsatzes gewöhnlich verschieden ist von der Orientierungsgeschwindigkeit am Beginn des unmittelbar folgenden zweiten Bewegungsatzes, sofern nicht am programmierten Zwischenpunkt angehalten wird. Die Anforderung an die Steuerung des Positioniersystem besteht nun darin, aufeinanderfolgende Bewegungsätze so zu verschleifen, daß auch in der Geschwindigkeit ein stetiger Übergang zwischen jeweils zwei Bewegungssätzen gewährleistet ist. Die Steuerung soll in einem durch ein Überschleifkriterium festgelegten Berich die beiden Bewegungsätze durch eine Überschleifkontur ersetzen, so daß die Orientierungsbewegungen geschwindigkeitsstetig ineinander übergehen. Zur mathematischen Beschreibung der Orientierung werden häufig "Roll"-,"Pitch"- und "Yaw"-Winkel verwendet (vgl. Paul R.B., "Robot Manipulators: Mathematics, Programming and Control", insbes. Kapitel 2, S.45 ff, The MIT Press, Cambridge (Mass. ) and London (GB), 1981).

Russell H.Taylor beschreibt in dem Aufsatz "Planning and Execution of Straight Line Manipulator Trajectories", erschienen in "Robot Motion", The MIT Press 1982, eine Orientierungsinterpolation mit stetigem Überschleifen, bei der die Orientierungsführung des Werkzeugs in den Einzelsätzen über einen Rotationsvektor für alle Werkzeugachsen vorgenommen und die Überschleifbewegung durch Überlagerung aufeinanderfolgender Einzelsätze generiert wird. Bei der Orientierungsführung in den Einzelsätzen macht man sich die Tatsache zunutze, daß jede dreidimensionale Rotation geometrisch durch einen spezifischen Drehvektor und einen Drehwinkel dargestellt werden kann.

Wenn mit dem beschriebenen Verfahren auch eine stetige Orientierungsführung erreicht wird, so weist die Einzelsatzinterpolation doch erhebliche Unzulänglichkeiten auf. Je nach Änderung des Roll-Pitch-Yaw-Winkels (im folgenden RPY-Winkel) C schneiden die Werkzeugachsen auf der Einheitskugel um die Werkzeugspitze große oder kleine Kreise heraus. Dabei kann im Extremfall eine Art Taumelbewegung entstehen, die technologisch sehr ungünstig ist, und da nur ein Rotationsvektor für alle Werkzeugachsen bereitsteht, kann dieses Verfahren nicht sinnvoll auf Kinematiken mit weniger als sechs Freiheitsgraden angewendet werden.

Aufgabe der Erfindung ist es für das Überschleifen zwischen zwei Bewegungssätzen bzw. Bahnsegmenten ein stetiges bewegungsoptimales Verfahren zu schaffen.

Das Verfahren soll sich auch sinnvoll auf Kinematiken mit weniger als sechs Freiheitsgraden anwenden und mit einer für den Anwender transparenten Orientierungsführung in den Einzelsätzen kombinieren lassen, z.B. mit der von R.P.Paul, in "Robot Manipulators: Mathematics, Programming and Control", The MIT Press 1981, beschriebenen Orientierungsführung über eine Schwenkbewegung der Werkzeuglängsachse ($X_{WZ}$-Achse) und eine überlagerte Drehbewegung.

Diese Aufgabe wird durch ein Verfahren zur Steuerung eines Positioniersystems gemäß dem Patentanspruch 1 gelöst.

Ein wesentlicher Vorteil der Erfindung liegt darin, daß aufgrund der besonderen Wahl des Hilfskoordinatensystems die RPY-Winkel B1, B2, A1 in den Überschleiforientierungen den Wert B1 = B2 = A1 = 0 haben. Damit reduziert sich der Aufwand für die Berechnung der verbleibenden RPY-Winkel und der RPY-Winkelgeschwindigkeiten erheblich. Außerdem wird die singuläre Konstellation, der RPY-Winkel bei B = +/-90°, die in diesem Bereich zu Taumelbewegungen führt, vermieden.

Die Erfindung betrifft alle Positioniersysteme, die die räumliche Lage eines Körpers einstellen. Das Verfahren läßt sich in jeder räumlichen Bewegungssteuerung einsetzen, z.B. in einer Werkzeugmaschinensteuerung oder einem anderen räumlich beweglichen System, auch wenn sich das folgende Ausführungsbeispiel auf einen Industrieroboter als Positioniersystem und ein robotergeführtes Werkzeug als zu positionierenden Körper bezieht (siehe Zeichnungen). Es zeigen:

FIG 1 ein Werkzeug W eines Roboters bezüglich eines kartesischen Koordinatensystems,

FIG 2 Definition der Roll-Pitch- und Yaw-Winkel,

FIG 3 eine Orientierungsbewegung des Roboterwerkzeugs während zwei aufeinanderfolgender Bewegungssätze,

FIG 4 eine Orientierungsbewegung während zwei aufeinanderfolgender Bewegungssätze mit einem Überschleifbereich,

FIG 5 das Hilfskoordinatensystem für eine Orientierungsbewegung im Überschleifbereich.

FIG 6 bis 8 Geschwindigkeitsprofile.

Vor der Beschreibung des erfindungsgemäßen Robotersteuerungsverfahrens sollen zunächst die grundsätzlichen mathematischen Beziehungen erörtert werden.

Aufgabe der Bahnsteuerung des Roboters ist es, ein an der Roboterhand angeflanschtes Werkzeug von einer Anfangsstellung auf einer definierten kartesischen Bahn in eine Endstellung zu überführen. Anfangs- und Endstellung umfassen dabei sowohl einen Positions-als auch einen Orientierungsanteil und sind auf ein vom Anwender frei wählbares Basissystem bezogen.

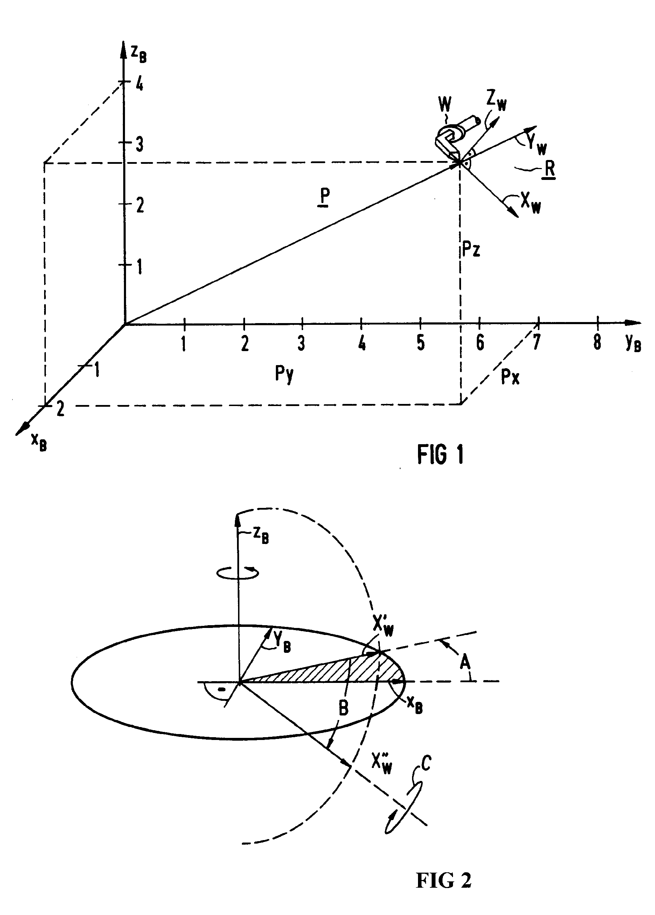

FIG 1 zeigt ein kartesisches Basiskoordinatensystem mit den Koordinaten $X_B$, $Y_B$, $Z_B$. In diesem Koordinatensystem ist von einem Roboter lediglich das Roboterwerkzeug W gezeigt. (Der Begriff "Roboterwerkzeug" ist allgemein zu verstehen und umfaßt alle Teile, die an der Roboterhand befestigt werden können, wie z.B. Greifer, Sensoren etc.) Der Ortspunkt der Spitze des Roboterwerkzeugs wird durch den Vektor $\underline{P}$ beschrieben. Die Orientierung $\underline{R}$ des Werkzeugs W wird durch das Werkzeugkoordinatensystem $X_W$, $Y_W$, $Z_W$ beschrieben, dessen Ursprung mit der Werkzeugspitze zusammenfällt. Für die Definition geeigneter Bewegungsvorschriften müssen zunächst der Ortspunkt $\underline{P}$ und die Orientierung $\underline{R}$ in mathematisch eindeutiger Form angegeben werden. Über die relative Lage des Werkzeugkoodinatensystems $X_W$, $Y_W$, $Z_W$ zum Basissystem $X_B$, $Y_B$, $Z_B$ kann die Werkzeugstellung mathematisch beispielsweise durch homogene Matrizen beschrieben werden:

$$F = \begin{pmatrix} n_x & o_x & a_x & p_x \\ n_y & o_y & a_y & p_y \\ n_z & o_z & a_z & p_z \\ 0 & 0 & 0 & 1 \end{pmatrix} = \left( \begin{array}{ccc|c} & \underline{R} & & \underline{P} \\ \hline 0 & 0 & 0 & 1 \end{array} \right) \qquad \text{Gl.1}$$

Der Spaltenvektor $\underline{P} = (p_x, p_y, p_z)^T$ beschreibt den Ursprung des Werkzeugsystems relativ zum Basissystem. Die Matrix $\underline{R}$ beschreibt die Orientierung des Werkzeugs im Basissystem, wobei der Spaltenvektor $\underline{n} = (n_x, n_y, n_z)^T$ die Lage der $X_W$-Achse im Basissystem kennzeichnet. Entsprechend kennzeichnen die Spaltenvektoren $\underline{0} = (o_x, o_y, o_z)^T$ die Lage der $Y_W$- und $\underline{a} = (a_x, a_y, a_z)^T$ die Lage der $Z_W$-Achse im Basissystem.

Die Orientierung $\underline{R}$ des Werkzeugs W kann alternativ über RPY- oder Euler-Winkel beschrieben werden. Da die RPY-Darstellung für die Erfindung relevant ist, sei sie kurz erläutert:

In FIG 2 sind die Roll-, Pitch- und Yaw-Winkel A, B und C dargestellt. Die $X_W$-Achse des - nicht dargestellten - Werkzeuges ist als $X_W'$-Achse auf die $X_B$, $Y_B$-Ebene des Basissystems projiziert. Der RPY-Winkel A ist der Winkel zwischen der $X_B$-Achse und der $X_W'$-Achse. Der Winkel B stellt den Erhebungswinkel der $X_W''$-Achse über der $X_B$-, $Y_B$-Ebene des Basissystems dar und der Winkel C bezieht sich auf eine Drehung um die $X_W''$-Achse, mit der nach Ausführung der Rotationen um A und B die $Y_B$- und $Z_B$-Achsen mit den - nicht gezeigten - $Y_W$- und $Z_W$-Achsen in Übereinstimmung gebracht werden können.

Der mathematische Zusammenhang zwischen der Orientierungsmatrix $\underline{R}$ und den RPY-Winkeln A, B, C ist gegeben durch:

$$\underline{R} = \text{Rot}(z, A) \cdot \text{Rot}(y, B) \cdot \text{Rot}(x, C) \qquad \text{Gl.2}$$

$$= \begin{pmatrix} \cos A & -\sin A & 0 \\ \sin A & \cos A & 0 \\ 0 & 0 & 1 \end{pmatrix} \cdot \begin{pmatrix} \cos B & 0 & \sin B \\ 0 & 1 & 0 \\ -\sin B & 0 & \cos B \end{pmatrix} \cdot \begin{pmatrix} 1 & 0 & 0 \\ 0 & \cos C & -\sin C \\ 0 & \sin C & \cos C \end{pmatrix} \qquad \text{Gl.3}$$

Die für die Darstellung des Überschleifverfahrens benötigte Terminologie steht damit bereit. Das Verfahren selbst sei - wenn es auch recht universell einsetzbar ist (u.a. für Zirkularsätze mit bahnbezogener Orientierungsführung) - am Beispiel einer konkreten Bewegungsaufgabe erläutert, nämlich dem Verschleifen zweier Linearsätze.

Dazu sei zunächst die Interpolation von linearen Einzelsätzen kurz skizziert, wobei für die Orientierungsführung eine Schwenkbewegung der Werkzeuglängsachse mit überlagerter Drehbewegung zugrunde gelegt werde. Aus Anfangs- und Endposition F bzw. F′

$$F = \begin{pmatrix} & \underline{R} & | & \underline{P} \\ \hline 0\ 0\ 0 & | & I \end{pmatrix} = \begin{pmatrix} \underline{n}\ \underline{o}\ \underline{a} & | & \begin{matrix} p_x \\ p_y \\ p_z \end{matrix} \\ \hline 0\ 0\ 0 & | & I \end{pmatrix} \qquad \text{Gl.4a}$$

$$F′ = \begin{pmatrix} \underline{n}′\ \underline{o}′\ \underline{a}′ & | & \begin{matrix} p′_x \\ p′_y \\ p′_z \end{matrix} \\ \hline 0\ 0\ 0 & | & I \end{pmatrix} \qquad \text{Gl.4b}$$

berechnet man zunächst die Distanzen

$$d_x = p′_x - p_x \qquad d_y = p′_y - p_y \qquad d_z = p_z - p′_z \qquad \text{Gl.5a,b,c}$$
$$S = (d_x^2 + d_y^2 + d_z^2)^{1/2} \qquad \text{Gl.6}$$

und schreibt die Orientierungsänderung als Produkt

$$R^{-1}\ R′ = \begin{pmatrix} n''_x & o''_x & a''_x \\ n''_y & o''_y & a''_y \\ n''_z & o''_z & a''_z \end{pmatrix} = \text{Rot}\ (\underline{k},\Theta)\ .\ \text{Rot}\ (x,phi) \qquad \text{Gl.7}$$

mit

$$\underline{k} = \frac{1}{(n''^2_y + n''^2_z)^{1/2}} \cdot \begin{pmatrix} 0 \\ -n''_z \\ n''_y \end{pmatrix} \qquad \text{Gl.8}$$

$$\Theta = \text{atan}\ 2\ (\underline{n} \times \underline{n}′,\ \underline{n}\ .\ \underline{n}′)$$
$$= \text{atan}\ 2\ ((n''^2_y + n''^2_z)^{1/2},\ n''_x) \qquad \text{Gl.9}$$

phi daraus implizit über Gl.7

dann bereitet man für s, $\Theta$ und phi Weg-Zeit-Funktionen s(tau), $\Theta$(tau), phi(tau), auf mit s(0) = $\Theta$(0) = phi(0) = 0, s(tau) = s, $\Theta$(tau) = $\Theta$, phi(tau) = phi, also beispielsweise trapezförmige Profile mit Beschleunigungs-, Konstantfahr- und Bremsphase und interpoliert gemäß der Vorschrift

$$F(tau) = \begin{pmatrix} \begin{matrix} R\ .\ \text{Rot}\ (\underline{k},\Theta(tau))\ . \\ \text{Rot}\ (x,phi(tau)) \end{matrix} & | & \begin{matrix} p_x + (d_x/s)\ s(tau) \\ p_y + (d_y/s)\ s(tau) \\ p_z + (d_z/s)\ s(tau) \end{matrix} \\ \hline 0 \qquad 0 \qquad 0 & | & \underline{1} \end{pmatrix} \text{Gl.10}$$

Für zwei in dieser Form interpolierte Linearsätze sei nun das erfindungsgemäße Orientierungsüberschleifen vorgestellt.

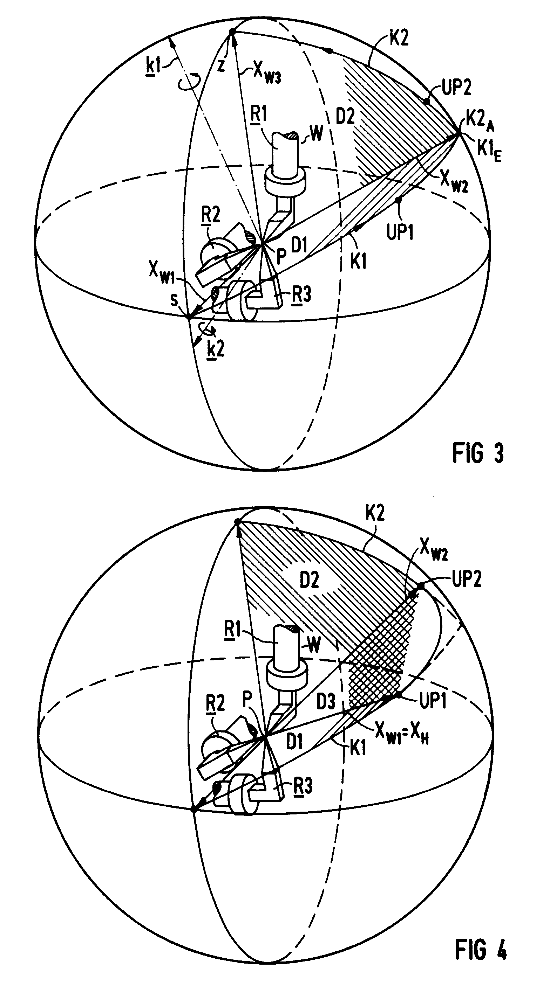

FIG 3 zeigt das Werkzeug W des Roboters in drei verschiedenen Werkzeugorientierungen und zwar der Orientierung $\underline{R}1$ im Anfangspunkt, der Orientierung $\underline{R}2$ im programmierten Zwischenpunkt sowie der Orientierung $\underline{R}3$ im Endpunkt. Um die Spitze $\underline{P}$ des Werkzeugs W ist die Einheitskugel gezeichnet, die sich mit dem Ort der Werkzeugspitze mitbewegt. Die ortsverändernde Verschiebung der Werkzeugspitze $\underline{P}$ ist hier jedoch nicht relevant, da der Beobachter der Orientierungsbewegung derselben Verschiebung unterliegt. Vom Werkzeugkoordinatensystem sind, entsprechend der jeweiligen Werkzeugorientierung $\underline{R}1$, $\underline{R}2$, $\underline{R}3$ lediglich die Achsen $X_{W1}$, $X_{W2}$, $X_{W3}$ eingezeichnet. Ohne Überschleifen wären zwei Linearsätze abzufahren; während der Ausführung des ersten Bewegungssatzes ginge die Werkzeugorientierung $\underline{R}1$ in die Werkzeugorientierung $\underline{R}2$ über und am Ende des zweiten Bewegungssatzes müßte die Werkzeugorientierung $\underline{R}3$ erreicht sein.

Zum Verständnis der Orientierungsbewegung des Werkzeugs W kann es hilfreich sein, wenn man sich in der Werkzeugspitze einen Laser vorstellt, dessen Strahl die $X_W$-Achse des Werkzeugs W bildet. Auf der Einheitskugel würde dann der Laserstrahl einen Lichtpunkt projizieren, der der Spitze des $X_W$-Einheitsvektors entspricht. Bei der Orientierungsbewegung des Werkzeugs W von der Werkzeugorientierung $\underline{R}1$ zur Werkzeugorientierung $\underline{R}2$ beschreibt der Lichtpunkt vom Startpunkt S eine Raumkurve K1 bis zum Endpunkt des ersten Bewegungssatzes $K1_E$. Der Endpunkt $K1_E$ der Raumkurve K1 ist zugleich der Anfangspunkt $K2_A$ der Raumkurve K2. Am Ende des zweiten Bewegungssatzes soll das Werkzeug die Orientierung $\underline{R}3$ eingenommen haben, so daß die $X_{W3}$-Achse (der Laserlichtpunkt) den Zielpunkt Z am Ende der Raumkurve K2 erreicht hat.

Die gegeneinander abgewinkelten Drehebenen D1 und D2 sollen verdeutlichen, daß die Orientierungsgeschwindigkeit auf der ersten Raumkurve K1 in der Regel verschieden ist von der Orientierungsgeschwindigkeit auf der zweiten Raumkurve K2.

Für einen stetigen Geschwindigkeitsübergang in der Orientierungsbewegung des Werkzeugs von der Position $\underline{R}1$ nach $\underline{R}2$ und schließlich nach $\underline{R}3$ wird deshalb auf der Raumkurve K1 und auf der Raumkurve K2 ein Überschleiforientierung UP1 bzw. UP2 nach einem Überschleifkriterium (z.B. Entfernung vom programmierten Zwischenpunkt) bestimmt. Zwischen diesen beiden Überschleiforientierungen UP1, UP2 wird nun eine Überschleifbahn so generiert, daß ein stetiger Übergang der Werkzeugorientierungen $\underline{R}1$, $\underline{R}2$, $\underline{R}3$ gewährleistet ist. Dies wird anhand der FIG 4 näher erläutert.

In FIG 4 ist das Werkzeug W wieder in den drei Werkzeugorientierungen $\underline{R}1$, $\underline{R}2$, $\underline{R}3$ mit der Einheitskugel um die Werkzeugspitze gezeigt. Zwischen den bekannten Überschleiforientierungen UP1, UP2 ist zusätzlich zu den aus FIG 3 bereits bekannten Drehebenen D1 und D2 eine Drehebene D3 aufgespannt.

Im Überschleifbereich zwischen den Überschleiforientierungen UP1 und UP2 wird nun die Orientierungsbewegung des Werkzeugs W über Roll-, Pitch- und Yaw-(RPY)-Winkel interpoliert, die relativ zu einem besonderen Hilfskoordinatensystem definiert sind. Das Hilfskoordinatensystem wird dabei so festgelegt, daß die $X_{W1}$-Achse (Laserstrahl) des Werkzeugkoordinatensystems an der Überschleiforientierung UP1 mit der $X_H$-Achse des Hilfskoordinatensystems zusammenfällt. Durch die $X_{W1}$-Achse (= $X_H$-Achse) der Werkzeugorientierung $\underline{R}$ am Überschleifpunkt UP1 und die $X_{W2}$-Achse der Werkzeugorientierung an der Überschleiforientierung UP2 wird die Ebene D3 aufgespannt, die die $X_H$-, $Y_H$- Ebene des Hilfskoordinatensystems bildet. Die $Z_H$-Achse des Hilfskoordinatensystems steht auf der Ebene D3 senkrecht. (Die $Y_H$- und die $Z_H$-Achse sind der Übersichtlichkeit halber nicht dargestellt.) Der Ursprung des Hilfskoordinatensystems $X_H$, $Y_H$, $Z_H$ liegt in der Werkzeugspitze des Werkzeugs W.

Damit ist das Hilfskoordinatensystem $X_H$, $Y_H$, $Z_H$ so festgelegt, daß in den Überschleiforientierungen UP1, UP2 der RPY-Winkel B (Erhebungswinkel) den Wert 0 hat.

Für die Überschleiforientierungen UP1, UP2 werden dann lediglich noch die verbliebenen RPY-Winkel A und C ermittelt und die vektoriellen Orientierungsgeschwindigkeiten in Winkelgeschwindigkeiten A', B', C' umgerechnet. Mit Hilfe dieser Randwerte werden schließlich für die RPY-Winkel skalare Weg-Zeitfunktionen A(tau), B(tau) , C(tau) so bestimmt, daß ein stetiger Geschwindigkeitsverlauf sichergestellt ist.

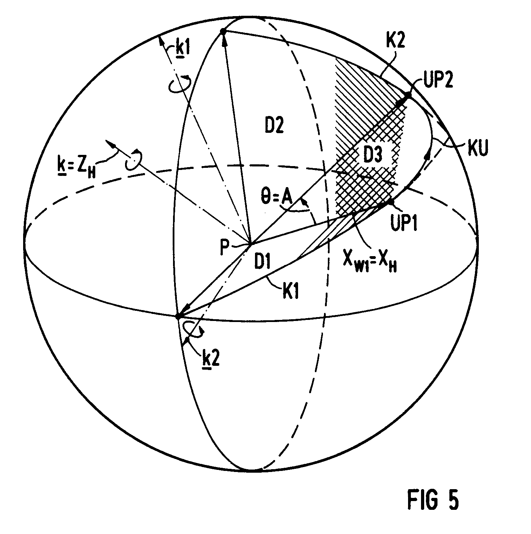

Anhand der FIG 5 werden nun die wesentlichen Verfahrensschritte mathematisch näher beschrieben. FIG 5 zeigt die bekannte Einheitskugel, deren Mittelpunkt mit der Spitze des - hier der Übersichtlichkeit halber nicht gezeigten - Roboterwerkzeugs zusammenfällt. Den Drehebenen D1, D2 und D3 sind jeweils die Ebenenvektoren $\underline{k}1$, $\underline{k}2$ und $\underline{k}$ zugeordnet. Es ist ersichtlich, daß der Ebenenvektor $\underline{k}$ mit der $Z_H$-Achse des Hilfskoordinatensystems $X_H$, $Y_H$, $Z_H$ zusammenfällt.

1. Zunächst werden die Werkzeugorientierungen $\underline{R}_{UP1}$ und $\underline{R}_{UP2}$ sowie die Orientierungsgeschwindigkeiten $W_{UP1}$ und $W_{UP2}$ in den Überschleifpunkten UP1 bzw. UP2 berechnet.

$$\underline{R}_{UP1} = \underline{R}1 . \text{Rot} (\underline{k}1, \theta 1(tau_{UP1})) . \text{Rot} (x, phi_1(tau_{UP1})) \quad \text{G1.11}$$
$$\underline{R}_{UP2} = \underline{R}2 . \text{Rot} (\underline{k}2, \theta 2(tau_{UP2})) . \text{Rot} (x, phi_2(tau_{UP2})) \quad \text{G1.12}$$

$$W_{UP1} = \underline{R}1 \cdot \underline{k}1 \cdot \Theta1'(tau_{UP1}) + \underline{R}_{UP1} \begin{pmatrix} 1 \\ 0 \\ 0 \end{pmatrix} phi1'(tau_{UP1}) \qquad Gl.13$$

$$W_{UP2} = \underline{R}2 \cdot \underline{k}2 \cdot \Theta2'(tau_{UP2}) + \underline{R}_{UP2} \begin{pmatrix} 1 \\ 0 \\ 0 \end{pmatrix} phi2'(tau_{UP2}) \qquad Gl.14$$

2. Im Hilfskoordinatensystem wird die Orientierungsdifferenz $\underline{R}_{UP1}^{-1} \cdot \underline{R}_{UP2}$ bestimmt

$$\underline{R}_{UP1}^{-1} \cdot \underline{R}_{UP2} = \begin{pmatrix} n''_x & o''_x & a''_x \\ n''_y & o''_y & a''_y \\ n''_z & o''_z & a''_z \end{pmatrix} = Rot(\underline{k},\Theta).Rot(x,phi) \qquad Gl.15$$

mit $\underline{k}$, $\theta$ und phi nach den Gleichungen 8, 9 und 7. Die Orientierung $\underline{R}_H$ im Hilfskoordinatensystem wird beschrieben durch

$$\underline{R}_H = (\underline{n}_H, \underline{o}_H, \underline{a}_H) \qquad Gl.16$$

wobei $\underline{n}_H$ der erste Spaltenvektor von $\underline{R}_{UP1}$ ist:

$$\underline{n}_H = \underline{X}_{W1} \qquad Gl.17a$$

$\underline{a}_H$ ergibt sich aus der Multiplikation von $\overline{\underline{R}_{UP1}}$ mit dem Vektor $\underline{k}$ der Drehebene D3

$$\underline{a}_H = \underline{R}_{UP1} \cdot \underline{k} \qquad Gl.17b$$

und der Vektor $\underline{o}_H$ steht senkrecht auf $\underline{a}_H$ und $\underline{n}_H$

$$\underline{o}_H = \underline{a}_H \times \underline{n}_H \qquad Gl.17c$$

3. Im dritten Schritt werden die RPY-Winkel A1, B1, C1 und A2, B2, C2 bestimmt, wobei sich aus der Definition des Hilfskoordinatensystems unmittelbar ergibt:

$$A1 = 0 \qquad B1 = B2 = 0 \qquad A2 = \theta \qquad Gl.18a,b,c$$
$$C1 = -psi \qquad C2 = phi - psi \qquad Gl.19a,b$$

mit

$$psi = atan2 \cdot (n''_z, n''_y)$$

4. Die RPY-Winkelgeschwindigkeiten A1', B1', C1', A2', B2', C2' ergeben sich aus den Gleichungen 20 und 21:

$$\begin{pmatrix} C1' \\ B1' \\ A1' \end{pmatrix} = \underline{R}_H^{-1} \cdot W_{UP1} \qquad Gl.20$$

$$\begin{pmatrix} C2' \\ B2' \\ A2' \end{pmatrix} = Rot(tau,\Theta)^{-1} \cdot \underline{R}_H^{-1} \cdot W_{UP2} \qquad Gl.21$$

5. Die Weg-Zeit-Funktionen A(tau), B(tau) und C(tau) werden mit folgenden Randbedingungen bestimmt

$$A(O) = A1 \qquad A'(O) = A1' \qquad Gl.22a,b$$
$$A(T) = A2 \qquad A'(T) = A2' \qquad Gl.23a,b$$

wobei die Überschleifzeit T die Hälfte der Zeit ist, die zum Verfahren eines Einzelsatzabschnittes benötigt wird.

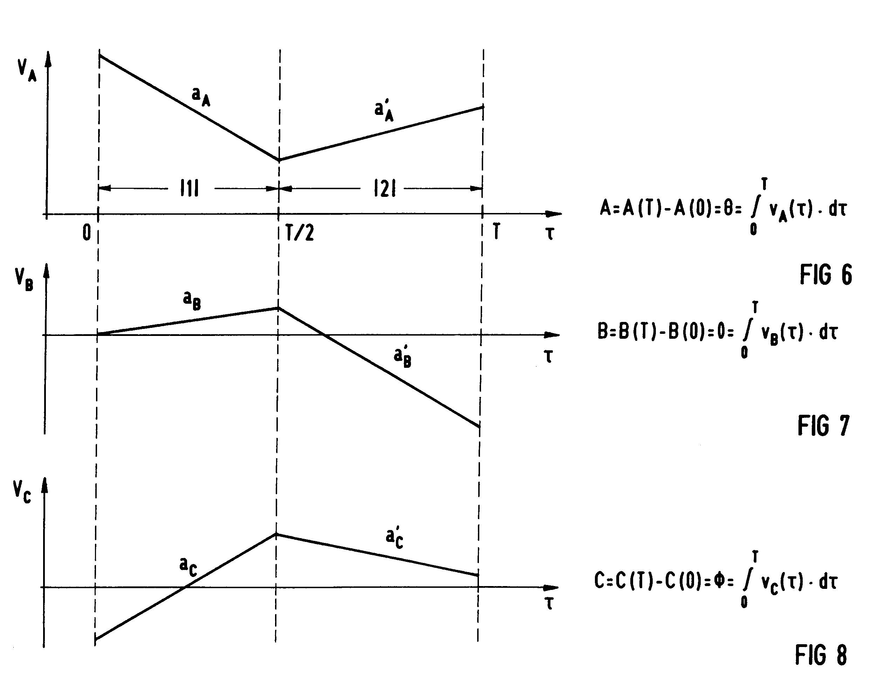

Wie in den Figuren 6, 7 und 8 gezeigt, kann beispielsweise für jeden RPY-Winkel A, B, C ein knickförmiges Geschwindigkeitsprofil mit zwei Zeitabschnitten der Dauer T/2 vorgegeben werden.

Die den jeweiligen Intervallen |1| bzw. |2| zugeordneten Beschleunigungen $a_A$, $a'_A$, $a_B$, $a'_B$ und $a_C$, $a'_C$ können wie bei der Achsinterpolation berechnet werden. Beispielsweise bestimmen sich für den RPY-Winkel A die Beschleunigungen

$a_A$, $a_A^{'}$ nach den Gleichungen 24a, b

$$a_A = (4 \cdot (A2 - A1) - (A2' + 3A1')T)/T^2 \quad \text{G1.24a}$$
$$a_A^{'} = (-4(A2 - A1) + (A1' + 3A2')T)/T^2 \quad \text{G1.24b}$$

Die Gleichungen für $a_B$, $a_B^{'}$, $a_C$, $a_C^{'}$ lauten entsprechend.

6. Bei der zyklischen Auswertung werden zunächst die Winkel A(tau), B(tau) und C(tau) gemäß den Geschwindigkeitsprofilen gebildet. Die Matrix $\underline{R}$(tau) bestimmt sich daraus zu:

$$\underline{R}(tau) = \underline{R}_H.Rot(z,A(tau)).Rot(y,B(tau)).Rot(x,C(tau)) \quad \text{G1.25}$$

**Patentansprüche**

1. Verfahren zur Steuerung eines Positioniersystems nach folgenden Merkmalen:

a) Von der Steuerung des Positioniersystems wird ein zu positionierender Körper (W) bezüglich eines beliebigen Bezugskoordinatensystems nach vorgebbaren Bewegungssätzen positioniert, wobei die räumliche Lage des Körpers (W) durch seinen Ortspunkt $(\underline{P})$ und durch seine Orientierung $(\underline{R})$ gegeben ist,

b) ferner ist diesem Körper (W) eine durch seinen Ortspunkt (P) verlaufende, frei wählbare Achse ($X_W$) zugeordnet,

c) bei einer Bewegung des Körpers (W) beschreibt seine Orientierung $(\underline{R})$ eine Raumkurve, dabei überstreicht die Spitze des Richtungsvektors der Achse ($X_W$) eine erste und eine zweite Raumkurve (K1,K2),

d) auf der ersten Raumkurve (K1) eines jeweils ersten Bewegungssatzes wird eine jeweils erste Überschleiforientierung (UP1) und auf der zweiten Raumkurve (K2) des nachfolgenden zweiten Bewegungssatzes eine zweite Überschleiforientierung (UP2) bestimmt,

e) die Ebene, die durch die $X_{W1}$-Achse ($X_{W1}$) der Körperorientierung $(\underline{R}$(UP1)) bei der ersten Überschleiforientierung (UP1) und die $X_{W2}$-Achse ($X_{W2}$) der Körperorientierung $(\underline{R}$(UP2)) in der zweiten Überschleiforientierung (UP2) aufgespannt wird, bildet die $X_H$-$Y_H$-Hauptebene ($X_H,Y_H$) eines kartesischen Hilfskoordinatensystems ($X_H,Y_H,Z_H$), dessen Ursprung der Ortspunkt $(\underline{P})$ des Körpers ist, wobei die $X_{W1}$-Achse ($X_{W1}$) mit der $X_H$-Achse ($X_H$) des Hilfskoordinatensystems zusammenfällt,

f) zwischen der ersten und der zweiten Überschleiforientierung (UP1,UP2) wird die Orientierung relativ zum Hilfskoordinatensystem über Roll- (A), Pitch- (B) und Yaw-Winkel (C) interpoliert,

g) dazu werden zunächst für die erste und die zweite Überschleiforientierung (UP1,UP2) die Roll-Pitch-Yaw-Winkel (A1,B1,C1,A2,B2,C2) relativ zum Hilfskoordinatensystem ($X_H,Y_H,Z_H$) bestimmt,

h) an den Überschleiforientierungen (UP1,UP2) werden die vektoriellen Orientierungsgeschwindigkeiten bestimmt, in das Hilfskoordinatensystem ($X_H,Y_H,Z_H$) umgerechnet und in Roll-, Pitch- und Yaw-Winkelgescheindigkeiten (A1',B1', C1',A2',B2',C2') transformiert,

i) aus den Roll-, Pitch- und Yaw-Winkeln (A1,B1,C1,A2,B2,C2) und den Winkelgeschwindigkeiten (A1',B1',C1',A2',B2',C2') werden skalare Weg-Zeit-Funktionen (A(tau),B(tau),C(tau)) so bestimmt, daß für den Übergang vom ersten zum zweiten Bewegungssatz ein stetiger Geschwindigkeitsverlauf sichergestellt ist.

**Claims**

1. Method for controlling a positioning system according to the following features:

a) the control of the positioning system positions a body (W) to be positioned with regard to any reference coordinate system according to specifiable motion sets, whereby the spatial position of the body (W) is given by its point of location $(\underline{P})$ and by its orientation $(\underline{R})$,

b) moreover, with this body (W) there is associated a freely selectable axis ($X_W$) extending through its point of location (P),

c) upon a movement of the body (W) its orientation $(\underline{R})$ describes a space curve, and in the process the tip of the direction vector of the axis ($X_W$) passes over a first and a second space curve (K1, K2),

d) on the first space curve (K1) of a respective first motion set a respective first concatenation orientation (UP1) is determined and on the second space curve (K2) of the subsequent second motion set a second concatenation orientation (UP2) is determined,

e) the plane which is extended through the $X_{W1}$-axis ($X_{W1}$) of the body orientation $(\underline{R}$(UP1)) at the first

7

concatenation orientation (UP1) and the $X_{W2}$-axis ($X_{W2}$) of the body orientation ($\underline{R}$(UP2)) in the second concatenation orientation (UP2) forms the $X_H$-$Y_H$ main plane ($X_H$, $Y_H$) of a cartesian auxiliary coordinate system ($X_H$, $Y_H$, $Z_H$), the origin of which is the point of location ($\underline{P}$) of the body, whereby the $X_{W1}$-axis ($X_{W1}$) coincides with the $X_H$-axis ($X_H$) of the auxiliary coordinate system,

f) between the first and the second concatenation orientation (UP1, UP2) the orientation is interpolated relative to the auxiliary coordinate system by way of roll (A), pitch (B) and yaw (C) angles,

g) for this purpose first of all for the first and the second concatenation orientation (UP1, UP2) the roll-pitch-yaw angles (A1,B1,C1,A2,B2,C2) are determined relative to the auxiliary coordinate system ($X_H$,$Y_H$, $Z_H$),

h) at the concatenation orientations (UP1, UP2) the vectorial orientation speeds are determined, converted into the auxiliary coordinate system ($X_H$,$Y_H$,$Z_H$) and transformed into roll-angle, pitch-angle and yaw-angle speeds (A1′,B1′,C1′,A2′,B2′,C2′),

i) from the roll, pitch and yaw angles (A1,B1,C1,A2,B2,C2) and the angle speeds (A1′,B1′,C1′,A2′,B2′,C2′) scalar path-time functions (A(tau),B(tau),C(tau)) are determined such that for the transition from the first to the second motion set a continuous speed characteristic is ensured.

## Revendications

**1.** Procédé de commande d'un système de positionnement ayant les caractéristiques suivantes:

a) l'unité de commande du système de positionnement positionne un corps (W) devant être positionné, par rapport à un système quelconque de coordonnées de référence, suivant des segments de trajet de déplacement pouvant être prédéterminés, la position du corps dans l'espace (W) étant définie par son lieu ($\underline{P}$) et par son orientation ($\underline{R}$),

b) en outre à ce corps (W) est associé un axe ($X_W$) qui peut être librement sélectionné et qui passe par le lieu (P) du corps,

lors d'un déplacement du corps (W), son orientation ($\underline{R}$) décrit une courbe dans l'espace et la pointe du vecteur directeur de l'axe ($X_W$) décrit des première et seconde courbes dans l'espace (K1,K2),

d) une première orientation de rectification (UP1) est déterminée sur la première courbe dans l'espace (K1) d'un premier segment de trajet et une seconde orientation de rectification (UP2) est déterminée sur la seconde courbe dans l'espace (K2) du second segment de trajet suivant,

e) le plan, qui est défini par l'axe $X_{W1}$ ($X_{W1}$) de l'orientation ($\underline{R}$(UP1)) du corps lors de la première orientation de rectification (UP1) et par l'axe $X_{W2}$ ($X_{W2}$) de l'orientation ($\underline{R}$(UP2)) du corps dans la seconde orientation de rectification (UP2), forme le plan principal $X_H$-$Y_H$ ($X_H$, $Y_H$) d'un système cartésien de coordonnées auxiliaires ($X_H$,$Y_H$,$Z_H$), dont l'origine est le lieu ($\underline{P}$) du corps, l'axe $X_{W1}$ ($X_{W1}$) coïncidant avec l'axe $X_H$ ($X_H$) du système de coordonnées auxiliaires,

f) l'orientation par rapport au système de coordonnées auxiliaires est interpolée, entre les première et seconde orientations de rectification (UP1,UP2), par l'intermédiaire d'angles de roulis (A), de tangage (B) et de lacet (C),

g) à cet effet les angles de tangage et de lacet (A1,B1,C1,A2,B2,C2) sont déterminés par rapport au système de coordonnées auxiliaires ($X_H$,$Y_H$,$Z_H$), tout d'abord pour les première et seconde orientations de rectification (UP1,UP2),

h) les vitesses vectorielles sont déterminées aux orientations de rectification (UP1,UP2), sont converties dans le système de coordonnées auxiliaires ($X_H$,$Y_H$,$Z_H$) et sont transformées en des vitesses angulaires de roulis, de tangage et de lacet (A1′,B1′,C1′,A2′,B2′,C2′),

i) des fonctions scalaire trajet - temps (A(tau), B(tau) et C(tau)) sont déterminées à partir des angles de roulis, de tangage et de lacet (A1,B1,C1,A2,B2,C2) et des vitesses angulaires (A1′,B1′,C1′,A2′,B2′,C2′) de manière à assurer une courbe de vitesse continue pour le passage du premier segment de trajet et au second segment de trajet.

FIG 1

FIG 2

FIG 3

FIG 4

FIG 5

$$A = A(T) - A(0) = \theta = \int_0^T v_A(\tau) \cdot d\tau$$

**FIG 6**

$$B = B(T) - B(0) = 0 = \int_0^T v_B(\tau) \cdot d\tau$$

**FIG 7**

$$C = C(T) - C(0) = \Phi = \int_0^T v_C(\tau) \cdot d\tau$$

**FIG 8**

EP 0 449 039 B1